# EUROPEAN PATENT APPLICATION

(11) **EP 2 360 988 A1**
(43) Date of publication of application: **24.08.2011**
(21) Application number: 11166631.9
(22) Date of filing: 13.07.2006
(51) Int. Cl.: H05B 3/00, F16C 13/00, B29B 13/02

(54) **Cylinder for driving and heating strips of plastic material during production**

(30) Priority: 20.07.2005 IT BO20050485
(62) Divisional of application: 06777753.2
(71) Applicant: S.I.M.A. Societa' Industrie Meccaniche Affini A R.L., 40056 Crespellano (IT)
(72) Inventor: Boccafogli, Sergio, 40128, BOLOGNA (IT)
(74) Representative: Jorio, Paolo

(57) **Abstract**

Cylinder for driving and heating strips of plastic material during production, characterized in that the said cylinder (2) is supported rotatably by special means at one of its ends, so that the whole length of its inner side surface is free and available for being heated by an adjacent radiating structure inside the cylinder, which is electrically powered and fixed, so as not to require the use of rotating joints.

## Description

The present invention relates to large-diameter cylinders which have an axis which is usually horizontal and motor-driven and on which the strips of plastic material, for example consisting of polyethylene or polypropylene, are driven in the known methods for the production of bands, raffia or other types of strips which must be fed and undergo suitable heating by the said cylinders in question.

In the known art, the driving cylinders in question are usually heated by means of circulation, inside a cavity thereof, via axial supply and return ducts and via a rotating joint, of a liquid heated externally by special means. This solution has proved to be constructionally complex, inefficient in terms of performance, subject to frequent maintenance and generally unreliable from a technological point of view, so that the aim of the invention is to overcome these drawbacks with a new solution which envisages heating of the useful surface of the cylinders in question, by means of a heat source which is powered electrically and positioned fixed inside the said cylinders, so as to irradiate the necessary heat over their inner side surface. Further characteristic features of the invention and the advantages arising therefrom will emerge more clearly from the following description of a preferred embodiment thereof illustrated purely by way of a non-smiting example in the figures of the accompanying plates of drawings in which:
- Fig. 1 shows a cylinder according to the invention sectioned along a plane which contains the axis of rotation of the said cylinder;
- Fig. 2 shows, on a larger scale and during the active phase, one of the spring-loaded devices supporting the annular source for internally heating the cylinder;
- Fig. 3 shows an elevation view from the outer end side of the cylinder according to Figure 1;
- Fig. 4 shows, with parts cross-sectioned and enlarged, one of the devices for supporting the annular heat-irradiating source, during the releasing step which allows assembly or disassembly of this source.

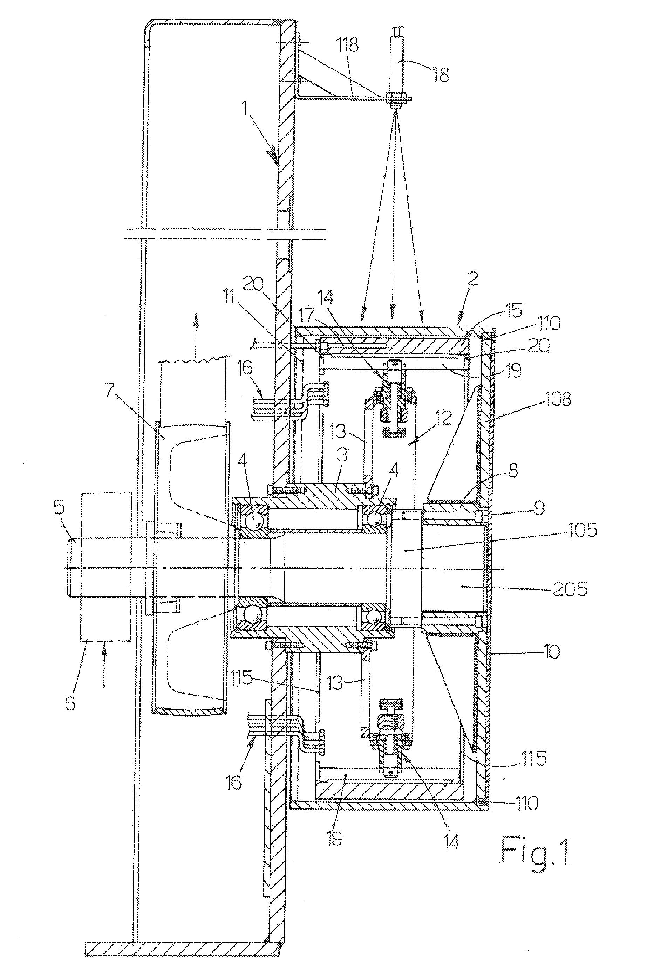

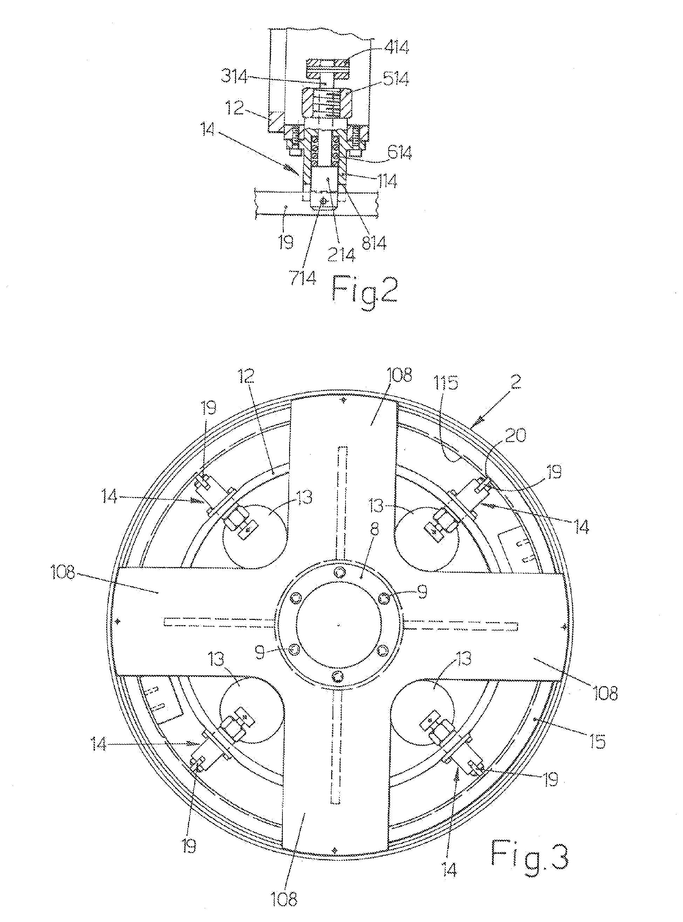

In Figure 1, reference numeral 1 denotes the shoulder of the base structure which supports laterally, rotatable about its horizontal axis, the steel cylinder 2 on which the strips of plastic material to be driven and heated are conveyed, In order to be able to implement the solution according to the invention, the cylinder is supported at one of its ends, so that the whole length of its free inner side surface is free and available for heating by an adjacent radiating structure which is electrically powered and fixed, so as not to require the use of rotating joints, According to the invention, one side of the shoulder 1 has, fixed thereto horizontally, a sturdy bush 3 which, by means of bearing with a high heat resistance, rotatably supports the middle part of a shaft 5 which, with the section projecting inside the shoulder 1, s connected to input drive systems 6 and to an optional output drive system 7 for kinematic connection to other adjacent cylinders, while on the other end the shaft 5 supports a flange 105 and terminates in a hub 205 which has, mounted thereon, a bush 8 which is fixed by means of screws 9 to the said flange 105 and which supports integrally on the outer end a radial-arm structure 108 (see also Fig. 3) which is integral with the outer edge of the cylinder 2 and on which a cover 10 preferably made of a material with high heat-insulating properties may be fixed by means of screws 110, in order to retain the heat inside the said cylinder 2. For this purpose, an optional membrane 11 of material with high heat-insulating properties may be fixed onto the surface portion of the shoulder 1 situated in the region of the cylinder 2, as indicated in Figure 1, in broken lines.

The bottom of a cup-shaped member 12 with weight-reducing ventilation openings 13 is fixed on the end of the bush 3 which is situated inside the cylinder 2, said member on its outer side surface having radially a series of spring-loaded devices 14 which are situated angularly equidistant from each other and which support, with the possibility of free radial expansion, but without the possibility of performing axial or rotating movements, an annular structure 15 of any suitable - also composite - type which is provided with electrical resistances (not shown) for the production of the heat necessary for heating the cylinder 2 and which has a width such as to occupy as far as possible and with a symmetrical arrangement the transverse extension of the inner side surface of the said cylinder 2 and which is positioned at a short distance from this surface, the latter being able in turn to be treated or machined in any way such as to receive and/or store the heat more efficiently. The electrical resistances of the annular structure 15 are powered by means of electrical connections 16 which pass through adjacent openings formed on the wall of the shoulder 1 and operation of these resistances is controlled by means of at least one temperature-measuring probe 17 and by means of at least one infrared ray sensor 18 which is fixed by means of a special support 118 on the shoulder 1 and is directed towards the underlying cylinder 2 in order to detect the infrared radiation emitted by this component.

With reference also to Figure 2 it can be seen that the devices 14 comprise a flanged bush 114 for fixing with screws onto the cup-shaped member 12 having axially sliding inside it a pin 214 with a shank 314 which projects from the end of the said bush which is directed towards the shaft 5 and which has a head 414, this end of the said bush being externally threaded and having a nut 514 screwed thereon. The bush 114 houses internally an opposition spring 614 which pushes the pin 214 outwards and which has characteristics such as to react to the weight of the annular structure 15. The pin 214 projects from the bush 114 with its end having a diametral incision inside which a flat steel bar 19 is seated and transversely pinned, as indicated by 714, said bar remaining parallel to the axis of the shaft 5 for guided co-operation with a diametral end incision 814 of the said bush 114. The bar 19, as can be seen in Figure 1, has overall a U shape so as to touch the heat source 15 only with its two end resets which are located inside small internal annular shoulders 115 of the said annular structure 15 which in this way is locked axially and which, owing to the presence of the springs 614, is free to expand thermally during heating and also during cooling, At least one of the bars 19, as illustrated in the case of the upper bar in Figure 1, is longer than the other bars and with its ends co-operates in the manner of a key with corresponding incisions 20 formed in the inner annular shoulders 115 of the annular structure 15 which in this way is prevented from performing rotational movements.

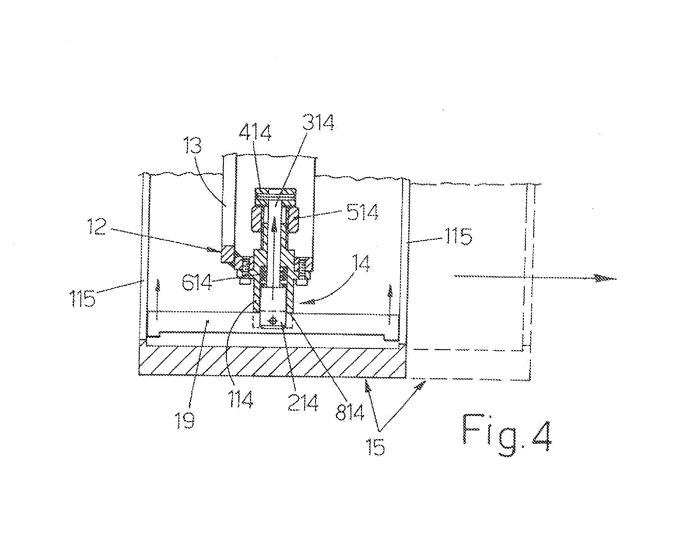

In order to assemble or disassemble the annular structure 15 onto/from the supports 14 it is necessary to perform the operation shown in Figure 4 which consists in unscrewing the nuts 514 so that these, acting on the heads 414, cause, in opposition to the springs 614, retraction of the pins 214 and the associated bars 19 which in this way emerge from the volume of the internal annular shoulders 115 of the annular structure 15 which can thus be displaced axially.

## Claims

1. Cylinder (2) for driving and heating strips of plastic material during production, wherein the said cylinder (2) is supported rotatably by special means at one of its ends;
wherein one side of a base shoulder (1) has, fixed horizontally thereto, a bush (3) which, by means of bearings (4) with a heat resistance, rotatably supports the middle part of a shaft (5) which, with its section projecting inside the said shoulder (1), is connected to driving means (6), while at the other end it supports a flange (105) and terminates in a hub (205) which has, mounted thereon, a bush (8) fixed by means of screws (9) to the said flange (105) and which integrally supports on the outer end a radial-arm structure (108) integral with the outer edge of the cylinder (2);
cylinder (2) **characterized in that** the end of the said bush (3) which is situated inside the cylinder (2) has, fixed thereon, the bottom of a cup-shaped member (12) which on its outer side surface radially supports a series of devices (14) which are spring-loaded and situated angularly equidistant from each other and which support, with the possibility of free radial expansion and without the possibility of axial or rotational movements, an annular structure (15) which supports the electrical resistances for production of the heat necessary for heating the said cylinder (2), which has a width such as to occupy as far as possible and with a symmetrical arrangement the transverse extension of the inner side surface of the said cylinder (2) and which is situated at a short distance from this surface.

2. Cylinder according to Claim 1, wherein the inner side surface of the said cylinder (2) may be treated or machined in any way such as to receive and/or store more efficiently the heat irradiated by the adjacent annular structure (15).

3. Cylinder according to Claim 1, wherein the electrical resistances of the annular structure (15) are powered by means of electrical connections (16) which pass through adjacent openings formed in the wall of the shoulder (1) and operation of these same resistances is controlled by means of at least one temperature-measuring probe (17) and by means of at least one infrared ray sensor (18) which is fixed on the shoulder (1) and oriented towards the underlying cylinder (2) so as to detect the infrared radiation emitted by the latter.

4. Cylinder according to Claim 1, wherein the devices (14) supporting the annular structure (15) comprise a flanged bush (114) for fixing by means of screws onto the cup-shaped member (12), which has, axially sliding therein, a pin (214)with a shank (314) which projects from the end of the said bush which is directed towards the shaft (5) and which has a head (414), this end of the said bush being externally threaded and receiving a nut (514) screwed thereon, said bush (114.) housing internally a spring (614) which pushes the said pin (214) outwards and which has characteristics such as to react to the weight of the annular structure (15), it being envisaged that this pin (214) projects from the guide bush (114) with its end having a diametral incision inside which a flat bar of steel (19) is seated and transversely pinned, said bar remaining parallel to the axis of the shaft (5) for guided co-operation with a diametral end incision (814) of the said guide bush (114).

5. Cylinder according to Claim 4, wherein the said bar (19) has overall a U-shaped form so as to touch the annular structure (15) only with its two end reliefs which are located inside small inner annular shoulders (115) of the annular structure (15) which in this way is locked axially and which, owing to the presence of the springs (614), is free to expand thermally following heating and also cooling.

6. Cylinder according to Claim 5, wherein at least one of the said bars (19) is longer than the other bars and with its ends co-operates in the manner of the key with corresponding incisions (20) formed in the inner annular shoulders (115) of the annular structure (15) which in this way is prevented from performing rotational movements.

7. Cylinder according to Claim 4, wherein, in order to remove the annular structure (15) from or mount it onto the inner radial supports (14), it is necessary to unscrew the nuts (514) of the said supports which, acting on the head (414) of the shanks (314), cause, in opposition to the springs (614), retraction of the pins (214) and the bars (19) which are pinned to the latter and which thus emerge from the volume of the inner annular shoulders (115) of the said annular structure (15) which may thus be displaced axially.
